(19) Europäisches Patentamt

European Patent Office

Office européen des brevets

(11) **EP 2 750 786 B1**

(12) **FASCICULE DE BREVET EUROPEEN**

(45) Date de publication et mention de la délivrance du brevet:
**12.06.2019 Bulletin 2019/24**

(21) Numéro de dépôt: **12756778.2**

(22) Date de dépôt: **14.08.2012**

(51) Int Cl.:
**B01J 8/34** *(2006.01)*     **B01D 45/08** *(2006.01)*

(86) Numéro de dépôt international:
**PCT/FR2012/051899**

(87) Numéro de publication internationale:
**WO 2013/030490 (07.03.2013 Gazette 2013/10)**

(54) **REGENERATEUR POUR UNITE DE CRAQUAGE CATALYTIQUE A CYCLONES EXTERNES.**

REGENERATOR FÜR KATALYTISCHE KRACKANLAGE MIT EXTERNEN ZYKLONEN

REGENERATOR FOR CATALYTIC CRACKING UNIT WITH EXTERNAL CYCLONES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.08.2011 FR 1157665**

(43) Date de publication de la demande:
**09.07.2014 Bulletin 2014/28**

(73) Titulaire: **Total Raffinage France**
**92400 Courbevoie (FR)**

(72) Inventeurs:
• **LLAMAS, Juan-David**
  **Cartagena (CO)**
• **BERRIC, Guillaume**
  **F-76290 Fontaine-la-Mallet (FR)**

(74) Mandataire: **Fédit-Loriot**
**38, avenue Hoche**
**75008 France (FR)**

(56) Documents cités:
WO-A1-00/35575     US-A- 2 728 632
US-A- 3 851 405     US-A- 4 589 352

**Description**

La présente invention concerne un régénérateur à lit fluidisé de taille réduite à cyclones externes pour une unité de craquage catalytique (FCC), sa mise en oeuvre dans un procédé de craquage catalytique et son utilisation comme régénérateur d'unités nouvelles ou encore en remplacement de régénérateurs de grande taille.

Il s'agit ici de transformer la conception des régénérateurs d'unités de craquage catalytique, contenant un lit fluidisé, pour lesquelles il était nécessaire de fabriquer des régénérateurs suffisamment longs pour favoriser le désengagement des particules solides entrainées par le gaz et assez larges au niveau de la phase diluée du lit fluidisé dans le régénérateur pour y disposer des cyclones permettant la séparation gaz/particules solides tout en limitant l'augmentation de la vitesse superficielle des gaz.

En effet, lorsque des particules solides sont fluidisées par un gaz, la concentration de particules qui sont entrainées en dehors de l'enceinte dépend de la hauteur de celle-ci et de la vitesse superficielle du gaz de fluidisation. Pour une vitesse de gaz donnée, la concentration des particules dans le gaz diminue avec la hauteur au dessus du niveau du lit fluidisé dense jusqu'à atteindre une valeur minimale limite. La hauteur minimale nécessaire pour atteindre cette concentration limite est la hauteur de désengagement, plus communément connue de l'homme du métier par l'acronyme anglais TDH (transport disengaging height).

Depuis de longues années la préoccupation des industriels a été d'optimiser la séparation des gaz récupérés à partir d'un mélange fluidisé gaz/solide, et de nombreux brevets ont été déposés pour différentes structures de cyclones ou séparateurs destinés à être placés au sein de la phase fluidisée peu dense du régénérateur. Il s'agit, habituellement, de deux étages de cyclones en série, chaque étage étant constitué de plusieurs cyclones en parallèle. On appelle les cyclones du premier étage, cyclones primaires et ceux du deuxième étage, cyclones secondaires. Cependant, ces cyclones s'usent rapidement lorsque la quantité et/ou la vitesse des particules solides entraînées par les gaz est importante, les dites particules ayant un effet abrasif sur la paroi interne des dits cyclones.

Ainsi lorsque, l'entrainement des particules est important, l'érosion des cyclones, notamment des cyclones secondaires, est une des principales causes d'arrêt inopiné des unités de craquage catalytique.

Actuellement, les solutions utilisées pour limiter ce phénomène consistent habituellement à augmenter la taille des régénérateurs. En effet, les régénérateurs de FCC sont souvent dimensionnés pour que, à une vitesse de gaz donnée, la hauteur au dessus du lit dense soit au moins égale à la TDH. Ceci permet de minimiser la quantité de solide qui doit être séparée du gaz par les cyclones. Par ce moyen, on obtient une diminution de pertes de catalyseur solide et un allongement de la durée de vie des cyclones. Dans certaines autres configurations, le diamètre du régénérateur, au-dessus du niveau du lit fluidisé, peut aussi être augmenté, toujours pour compenser la surface occupée par les cyclones et empêcher toute augmentation de la vitesse du gaz susceptible d'accroître la quantité de particules entraînées jusqu'aux cyclones. Ces deux solutions ont néanmoins un effet limité et se traduisent par des coûts de fabrication importants.

Pour remédier à ces problèmes d'efficacité limitée, aux coûts de remplacement non négligeable des cyclones, et aux coûts liées à la construction d'un régénérateur de taille importante, la demanderesse a choisi d'utiliser des dispositifs ou internes efficaces de séparation des gaz d'avec les particules solides entraînées, permettant de limiter l'accélération de la vitesse des gaz tout en ralentissant très fortement celle des particules solides, ces dispositifs ou internes étant de préférence situés dans la phase diluée du régénérateur.

Dans le domaine des régénérateurs de FCC, diverses configurations permettant de diminuer l'entrainement de solide ont été proposées.

Le brevet US6503460 décrit un régénérateur de FCC à contrecourant équipé d'un interne dans la phase dense du lit fluidisé. Alors que l'objectif principal de l'interne est d'améliorer le contact entre les phases, une réduction de l'entrainement de particules solides a aussi été observée. Cette diminution est attribuée à la diminution du diamètre des bulles ascendantes des gaz traversant l'interne dans la phase dense, juste avant leur éclatement en surface du lit catalytique dense.

Le brevet US 7829750 présente un régénérateur de FCC dont le diamètre de la phase diluée du lit fluidisé a été augmenté pour limiter la vitesse superficielle du gaz. Dans ce cas, un interne est placé à la base de l'élargissement. D'après ce brevet, l'utilisation simultanée de ces 2 solutions permet de limiter l'entrainement de particules solides. Cette solution est particulièrement appliquée aux lits catalytiques présentant une concentration en particules de moins de 40 microns, inférieure à 2%.

Dans le brevet US 3851405, on dispose des barres ou des tubes disposés à des intervalles fixes, la fonction de ces barres ou tubes étant de ralentir la vitesse des particules qui volent au-dessus du mélange fluidisé. L'intervalle entre chaque interne et son plus proche voisin tombe dans l'intervalle de 0,05 à 0,3 fois la hauteur du lit fluidisé et le rapport de la surface de projection de l'ensemble des internes sur la surface de section du réacteur n'est pas moins grand que 0,5. La Demanderesse a constaté que les barres ou tubes conduisent à une augmentation de la vitesse du gaz, ce qui n'est pas souhaitable. En outre, dans ce document, la conduite de retour des particules solides reliant le cyclone au réacteur débouche au dessus de l'interne, de sorte que les solides renvoyés au réacteur sont susceptibles d'être à nouveau entrainés par le gaz, ce qui n'est pas souhaitable.

Dans le brevet EP49130, le dispositif permettant de réduire le nombre de particules entraînées dans le gaz est un interne placé dans une zone libre du réacteur dont le rapport de la surface projetée sur la section du réacteur n'est pas moins que 0,8 et dont le rapport de l'ouverture sur la surface de la section non occupée du réacteur varie de 0,3 à 0,9. Un tel interne est obtenu par l'association de disques et d'anneaux, de corps en rotation et/ou un assemblage de lames inclinées pour prévoir une évacuation descendante des grains.

Dans le brevet US2728632, l'interne disposé dans le réacteur est constitué d'une couche de plaques parallèles entre elles de largeur telle que le rapport de leur largeur sur le diamètre du réacteur dans lequel elles sont installées est de 4:1. Ici, l'objectif recherché est de faire monter les gaz diagonalement dans le réacteur et d'obliger les solides entraînés à rencontrer les plaques, le contact permettant le ralentissement de la vitesse des solides qui retombent finalement le long de chacune des plaques.

De tels dispositifs de l'art antérieur ont permis de limiter l'entrainement de solides mais sans pour autant permettre la diminution de la taille des régénérateurs. Les contraintes liées à la fabrication des unités de grande taille en termes de coût et d'ingénierie sont donc restées inchangées. Parallèlement, si la diminution de l'entrainement n'est pas suffisamment importante, de tels dispositifs nécessitent l'utilisation de deux étages de cyclones. Les problèmes de fiabilité liés à l'utilisation de cyclones secondaires ne peuvent donc pas être complètement exclus. Ce manque de fiabilité des cyclones secondaires favorise les arrêts d'unités coûteuses en coût de réparation et surtout en temps d'arrêt de production.

La demanderesse a donc préconisé un procédé de séparation des particules du gaz issu d'un lit fluidisé qui consiste à couvrir la plus grande surface possible de la section du réacteur au moyen d'un interne en vue de rabattre le maximum de particules vers le lit tout en limitant la surface passante occupée par celui-ci à tous niveaux perpendiculairement à l'axe du dit réacteur, pour obtenir la plus grande surface de passage possible et réduire au maximum l'augmentation de la vitesse du gaz.

La présente invention a donc pour objet un régénérateur pour unité de craquage catalytique formé d'une enceinte comprenant une première partie destinée à être occupée par un lit fluidisé dense de particules solides et une deuxième partie disposée au-dessus de la première destinée à être occupée au moins en partie par un lit fluidisé de faible densité ou dilué en particules solides, la dite deuxième partie comprenant un interne selon la revendication 1 recouvrant par projection sur le plan de la section de l'enceinte au moins 80% de la section libre de l'enceinte, l'enceinte étant équipée d'au moins un cyclone pour la séparation d'un mélange de gaz et de particules solides issu du lit à faible densité, le cyclone étant placé à l'extérieur de l'enceinte, ledit cyclone étant agencé pour collecter ledit mélange de gaz et de particules solides et comportant une conduite débouchant à l'intérieur de l'enceinte, en dessous dudit interne et sans traverser ce dernier.

Dans le cadre de la présente description, par particules solides, on entend tous types de matériaux utilisés dans des mélanges fluidisés, mais on parlera avantageusement de particules solides de catalyseurs comme on en trouve habituellement dans les unités de FCC.

De même, on entend par section de l'enceinte, le plan perpendiculaire à l'axe de ladite enceinte, et donc au sens de circulation du mélange de gaz et de particules solides. La section libre de l'enceinte est la surface de passage laissée libre sur le plan de la section de ladite enceinte, hors équipement situé à l'intérieur de l'enceinte, tel que cyclone, conduite tubulaire, interne, ou autre dispositif usuel.

L'avantage premier de l'invention est de faire jouer à l'interne le rôle d'un séparateur primaire comme celui actuellement joué par un ou plusieurs cyclone(s) souvent de grande taille, enfermé(s) dans le régénérateur. Plus la quantité de particules solides retenues par l'interne dans l'enceinte du régénérateur est grande, moins il est nécessaire de séparer les dernières particules dans des cyclones à l'intérieur de celui-ci.

Un autre avantage est de pouvoir installer un interne recouvrant la totalité de la section du régénérateur sans se préoccuper de laisser de la place à des cyclones internes, ce qui constitue un gain économique certain lié à la diminution de la hauteur et donc du volume du régénérateur. En effet, le critère de hauteur définie par la TDH, ne serait plus à respecter car la concentration en solides après l'interne est sensiblement inférieure à celle qui aurait pu être atteinte, sans interne, en respectant le critère de TDH.

En utilisant un interne convenablement choisi et placé de façon à couvrir la totalité de la surface du lit fluidisé dans sa partie la moins dense, l'entrainement de particules solides peut être réduit de façon importante juste après l'interne. De ce fait, la hauteur de la phase diluée peut être fortement réduite et par conséquent, celle de l'enceinte du régénérateur aussi, qui ne contiendra presque plus que la phase dense du lit, le besoin en séparateurs cycloniques disposés dans l'enceinte du régénérateur devenant quasi nul. Ainsi, un seul étage de cyclones disposés à l'extérieur de l'enceinte du régénérateur peut permettre de réduire les pertes de particules solides aux niveaux attendus généralement en sortie du régénérateur. Ceci est particulièrement avantageux lorsqu'on sait que, pour une unité FCC qui produit 7500 tonnes d'effluent par jour, on peut atteindre des pertes de 800kg/jour de catalyseur au niveau du régénérateur et des pertes de 200 kg/ jour de catalyseur au niveau du réacteur FCC.

Le gaz en sortie de l'enceinte du régénérateur équipé d'un interne étant faiblement chargé en particules solides, le (ou les)cyclone (s) disposé(s) en sortie est (sont) moins soumis à des problèmes d'érosion communément rencontrés dans des unités de craquage catalytique. L'invention concerne donc un régénérateur de FCC qui serait non seulement plus petit mais aussi plus fiable que les régénérateurs à lit bullant classiques.

Un autre avantage de l'invention est qu'en déplaçant les cyclones à l'extérieur de l'enceinte du régénérateur et en diminuant la quantité de particules envoyées vers ceux-ci, l'unité est moins sensible, en termes de fiabilité, à l'augmentation du débit d'air introduit pour la combustion du coke présent sur le catalyseur, pour ce qui est d'un FCC. Ainsi, il est possible d'augmenter plus facilement la capacité des unités de FCC et donc leur rendement.

Par ailleurs, le fait que les conduites reliant les cyclones externes à l'enceinte ne traversent pas l'interne permet de réduire les risques de passage préférentiel du gaz au travers de l'interne, le long de cette conduite. De tels passages préférentiels du gaz au travers de l'interne le long de la ou des conduites sont susceptibles de favoriser une érosion de l'interne et/ ou de la conduite, ce qui n'est pas souhaitable.

En outre, la traversée de l'interne par ces conduites réduirait la surface disponible de l'interne, ce qui aurait pour conséquence l'augmentation de la vitesse des gaz, ce qui n'est pas souhaitable en termes d'efficacité de séparation des solides.

Dans un mode de réalisation préféré de l'invention, le régénérateur comprend un, deux ou trois étages de cyclones en série, chaque étage étant composé d'un nombre de cyclones variant de 1 à 10.

En particulier, le ou les cyclones, d'un unique étage de cyclone(s) ou du premier étage de cyclone(s), est ou sont agencés pour collecter le mélange de gaz directement en sortie de l'enceinte, par exemple au moyen d'une ou plusieurs conduites raccordées à une conduite de sortie de l'enceinte, encore appelée cheminée.

Le ou les cyclones du deuxième ou du troisième étage de cyclone(s) peut, ou peuvent, être agencé pour collecter le mélange de gaz directement en sortie du ou des cyclones de l'étage précédent, par exemple au moyen d'une ou plusieurs conduites raccordées à une conduite de sortie du ou des cyclones de l'étage précédent.

Le régénérateur est de préférence équipé de deux étages de cyclones en série, un étage de cyclones primaires dont le (les) cyclone(s) est (sont) agencé(s) pour collecter les gaz issus de l'enceinte du régénérateur, et un étage de cyclones secondaires dont le (les) cyclone(s) est (sont) agencé(s) pour collecter les gaz issus de l'étage de cyclones primaires, et la (les) conduite(s) qui renvoie(nt) les particules solides du (des) cyclone(s) primaire(s) à l'enceinte débouche(nt) dans la première partie de l'enceinte, sous l'interne et sans le traverser, et la (les) conduite(s) qui renvoie(nt) les particules solides du (des) cyclone(s) secondaire(s) à l'enceinte débouche(nt) dans la deuxième partie de l'enceinte, sous l'interne et sans le traverser.

L'interne recouvrant une grande partie de la section de l'enceinte du régénérateur, celui-ci sera disposé avantageusement au-dessus du lit dense à une hauteur h de la surface du lit fluidisé dense telle que le rapport de cette hauteur sur la hauteur du fluidisé dense $H_1$ varie de 0.05 à 1.5. Cette hauteur, également appelée épaisseur par la suite, est mesurée parallèlement à l'axe longitudinal de l'enceinte, généralement vertical.

Le lit fluidisé de faible densité ou dilué peut se caractériser par son taux de vide. Ce dernier est défini comme étant le rapport du volume de gaz sur le volume total du mélange fluidisé. On définira donc une phase dense du mélange fluidisé comme étant celle où le taux de vide est inférieur à 0,7, soit, lorsque le volume du gaz est inférieur à 70% du volume du mélange fluidisé. La phase de faible densité ou diluée sera définie comme celle où le taux de vide est supérieur à 0,7, soit, lorsque le volume du gaz est supérieur à 70% du volume du mélange fluidisé.

Pour calculer le taux de vide d'un mélange fluidisé, on ne peut que se rapprocher de la densité des constituants du dit mélange fluidisé. On sait que le taux de vide, ou son corollaire la densité d'un mélange fluidisé, n'est pas uniforme sur toute sa hauteur et/ou sa largeur dans une enceinte, et notamment qu'elle varie très fortement entre la partie inférieure et la partie supérieure de cette dernière. Le taux de vide peut être calculé à partir de la densité du gaz présent dans le mélange fluidisé (Dg), de la densité des solides utilisés (Ds) et de la densité du mélange fluidisé (Dm).

On calcule ce taux de vide à partir de l'équation (I) suivante :

$$\text{Taux de vide} = (Ds - Dm) / (Ds - Dg) \text{ (I)}$$

Les densités du solide et du mélange de gaz contenus dans le mélange fluidisé peuvent être mesurées et/ou calculées par des techniques connues en soi de l'Homme du Métier.

La densité du mélange fluidisé est obtenue par exemple, par mesure de la perte de charge au moyen de capteurs de pression disposés à deux niveaux du dit mélange, considérant qu'un mélange fluidisé se comporte comme un liquide (voir description page 5 de l'ouvrage « Fluidization Engineering » de Daizo Kunii et Octave Levenspiel - 2ème édition, 1991). Comme la perte de charge mesuré entre ces deux points du mélange fluidisé est égale selon l'équation (II) ci-dessous :

$$\Delta P = Dm*g*H \ (II),$$

au produit de Dm la densité mélange fluidisé, de g l'accélération de la pesanteur et de H la distance séparant ces deux points, nous pouvons recalculer facilement Dm.

Pour un mélange fluidisé contenant un solide dont la densité apparente est de l'ordre de 1350 kg/m$^3$, dans un mélange gazeux contenant plus de 70% d'azote à une pression voisine de 2 bars et une température de l'ordre de 750°C, le taux de vide est supérieur à 0,7 et la densité est inférieure à 400Kg/m$^3$.

Pour optimiser la taille du régénérateur et donc le nombre de cyclones en sortie des gaz, on choisira la structure de l'interne pour que ce dernier occupe moins de 10% de la section libre de passage parallèle à la section de l'enceinte du régénérateur et pour que sa projection sur le plan de ladite section couvre plus de 80% de la surface de ladite section libre de passage, et de préférence plus de 90% de celle-ci.

Dans le cadre de la présente invention, lorsque l'interne occupe moins de 10% de la section libre de l'enceinte du régénérateur, cela veut dire que la surface occupée par la section du dit interne parallèle ou superposable à la section libre de l'enceinte du régénérateur correspond à moins de 10% de la surface de ladite section libre.

De façon préférée, la section de l'interne parallèle au plan de la section de l'enceinte du régénérateur n'occupera qu'au plus 5% de la surface de ladite section libre de passage laissée libre dans l'enceinte du régénérateur.

L'interne est composé d'un ou plusieurs éléments unitaires, chaque élément unitaire étant composé d'un ou plusieurs étages de plaques inclinées. Selon un mode de réalisation alternatif, les plaques de deux étages adjacents sont disjointes.

Ainsi, aucun canal de circulation préférentiel ne se forme suivant l'axe de l'enceinte du régénérateur lorsque le gaz traverse les étages successifs de plaques de l'interne, contrairement à d'autres systèmes connus, tel que celui décrit dans le document US 4 589 352. En outre, dans un système tel que celui du document US 4 589 352, il existe des volumes de rétention de solide sous l'interne, ce qui n'est pas souhaitable.

Un interne selon l'invention présente avantageusement une hauteur de 30 à 50 cm et l'inclinaison de chaque plaque par rapport à un plan horizontal est comprise entre 30 et 60°, ces deux bornes incluses.

L'inclinaison de chaque plaque de l'interne dans l'enceinte, par rapport à un plan horizontal, peut être comprise entre 35 et 55°, ces deux bornes incluses. De manière particulièrement préférée, l'inclinaison de chaque plaque par rapport à un plan horizontal est comprise entre 40 et 50°, ces deux bornes incluses. De plus, il a été observé qu'une valeur de 45° donne d'excellents résultats en matière de séparation de particules solides.

Tout interne respectant les caractéristiques décrites précédemment pourrait convenir à la mise en oeuvre de la présente invention.

Dans un mode préféré, on choisira un interne composé d'un ou plusieurs éléments unitaires, chaque élément étant composé d'un ou plusieurs étages de plaques inclinées, parallèles les unes aux autres dans un même étage et dont le sens d'inclinaison varie d'un étage à l'autre, ou encore composé d'un ou plusieurs éléments unitaires, chaque élément étant composé d'un ou plusieurs étages de plaques inclinées, les plaques inclinées de chaque étage étant entrecroisées.

De préférence, parmi les dispositifs d'internes accessibles sur le marché, la présente invention utilise l'interne décrit dans la demande de brevet WO00/35575. Dans ce document, l'interne est utilisé pour améliorer le contact entre un gaz et des solides circulant à contrecourant. Contre toute attente, la demanderesse a observé que ce type d'interne est parfaitement adapté pour séparer des solides entrainés par un gaz circulant en co-courant, comme dans la présente invention.

Alternativement, la présente invention utilise l'interne décrit dans la demande WO2012/022910.

De façon pratique, pour les grandes sections d'enceinte du régénérateur, l'interne comprendra plusieurs internes unitaires à l'intérieur de l'enceinte du régénérateur. En effet, pour réaliser l'interne à l'échelle industrielle, on formerait l'interne couvrant en tout ou partie la section libre de l'enceinte par la juxtaposition d'internes unitaires permettant d'atteindre les caractéristiques de l'interne selon l'invention.

On ne sortirait pas du cadre de l'invention, si, pour parfaire la séparation des gaz et des solides, notamment dans un régénérateur de craquage catalytique en lit fluidisé, on ajoutait un deuxième interne au sein du lit fluidisé dense de l'enceinte du régénérateur, permettant de ralentir l'entraînement de particules, notamment de coke, et donc une meilleure combustion de celui-ci au sein du lit.

En outre, l'invention telle que décrite est également applicable à tous les étages d'un régénérateur multi-étagé, notamment pour la construction de régénérateurs neufs ou la rénovation d'unités anciennes.

L'invention concerne également un procédé de séparation d'un mélange de gaz et des particules solides issu d'un régénérateur d'une unité de craquage catalytique, ledit régénérateur comprenant une enceinte dont une première partie est occupée par un lit fluidisé dense de particules de catalyseur et une deuxième partie, disposée au-dessus de la première partie, qui est occupée par un lit fluidisé de faible densité en particules de catalyseur relativement au lit dense,

dans lequel les gaz et solides provenant du lit à faible densité traversent un interne situé à l'intérieur de l'enceinte du régénérateur, puis sont collectés en sortie de l'enceinte par au moins un cyclone de séparation situé à l'extérieur de ladite l'enceinte,

dans lequel les particules solides récupérées par le ou les cyclone(s) externe(s) sont renvoyées à l'intérieur de l'enceinte, en dessous de l'interne, sans traverser ce dernier, et

dans lequel ledit interne recouvre par projection sur le plan de la section de l'enceinte du régénérateur au moins 80% de ladite section libre de l'enceinte du régénérateur, ledit interne étant composé d'un ou plusieurs éléments unitaires, chaque élément unitaire étant composé d'un ou plusieurs étages de plaques inclinées, chaque étage étant par exemple composé de plaques entrecroisées.

En particulier, l'utilisation d'un interne selon l'invention, situé à l'intérieur de l'enceinte du régénérateur, permet de réduire de plus de 70% la quantité de particules solides à traiter par le ou les cyclones, ce qui peut permettre de réduire le nombre de cyclones ou d'utiliser des cyclones de plus faibles dimensions.

L'interne utilisé peut présenter une ou plusieurs des caractéristiques décrites plus haut ou en référence aux exemples.

La présente invention est maintenant décrite à la lumière des figures et exemples donnés ci-après.

La figure 1 montre un régénérateur de taille réduite équipé d'un interne placé dans la partie du lit fluidisé le plus dilué.

La figure 2 présente deux types d'internes 2A et 2B utilisables et efficaces dans un régénérateur miniaturisé.

La figure 3 représente un régénérateur équipé d'un interne et de deux étages de cyclones.

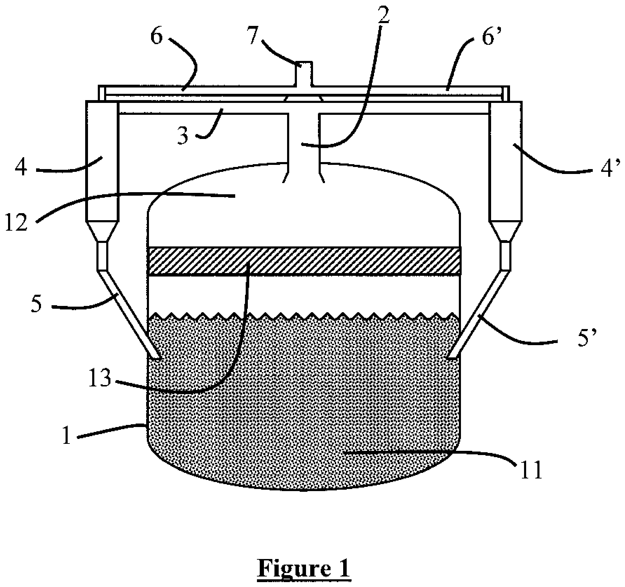

La figure 1 représente un régénérateur selon l'invention qui comprend une enceinte (1) dans laquelle se trouve un lit fluidisé de particules solides comprenant un lit fluidisé dense (11) et un lit fluidisé dilué (ou à faible densité) (12), ce dernier comprenant un interne (13) disposé immédiatement au-dessus du lit (11).

Le régénérateur selon l'invention comprend dans sa partie haute une cheminée (2) de récupération des gaz, ces derniers étant éventuellement encore chargés en fines particules de solides, ladite cheminée (2) redirigeant ces gaz via une conduite (3) vers deux cyclones (4) et (4'). De manière connue, la fonction de tels cyclones (4) et (4') est de collecter le mélange de gaz et de particules solides, directement à la sortie de l'enceinte (1), et de séparer les particules solides. Le gaz est éliminé de ces cyclones (4) et (4') via des évacuations (6) et (6'), puis via une conduite (7). Les solides éventuellement récupérés dans les cyclones sont renvoyés dans le lit dense (11) du régénérateur par des conduites (5) et (5'). Ces conduites (5, 5') débouchent à l'intérieur de l'enceinte (1), sous l'interne (13).

L'enceinte (1) comprend également un distributeur de gaz à sa base, non représenté sur la figure 1.

La figure 1 représente ainsi un exemple de régénérateur équipé d'un unique étage de deux cyclones. De manière similaire, l'enceinte du régénérateur peut être équipée d'un nombre supérieur de cyclones, par exemple de 3 à 10 cyclones reliés de manière similaire à l'enceinte afin de collecter le mélange de gaz et de particules solides issu du lit à faible densité. En variante, un seul des deux cyclones peut être prévu.

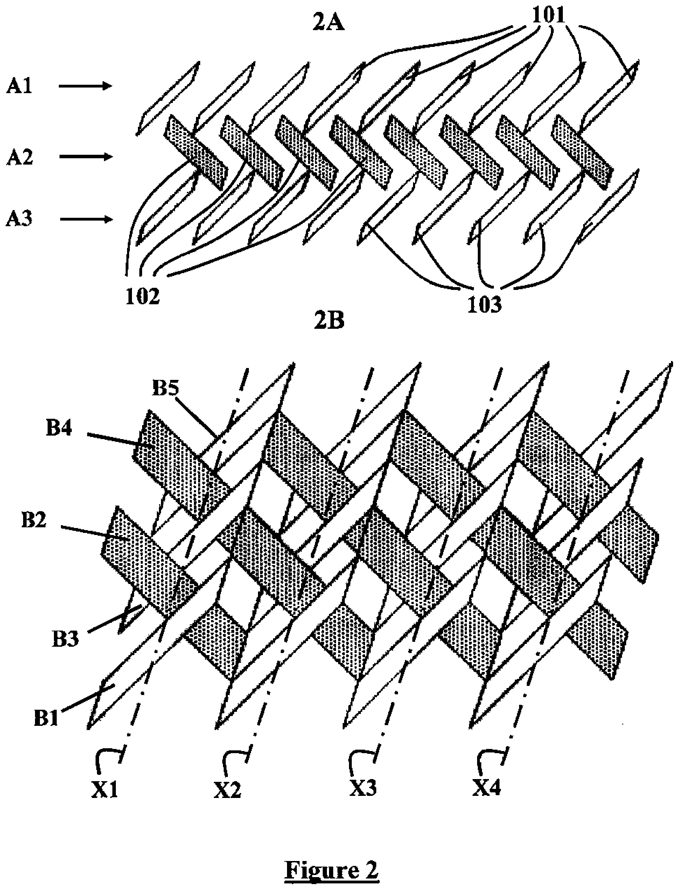

Dans la figure 2, l'interne 2A correspond à une superposition de couches de lamelles 101, 102, 103 (ou déflecteurs), équidistantes et parallèles entre elles au sein d'une même couche. Les lamelles 101, 102, 103 d'une même couche sont ainsi inclinées d'un même angle par rapport au plan de coupe de l'interne (perpendiculaire à l'axe de l'enceinte). Les inclinaisons des lamelles de deux couches adjacentes sont opposées par rapport à ce plan de coupe de l'interne. Pour des raisons de clarté, chaque couche A1, A2, A3 de l'interne 2A de la figure 2 comprend des lamelles 101, 102, 103, respectivement, toutes parallèles entre elles. Bien entendu, un interne 2A pourra comprendre un nombre variable de lamelles 101, 102, 103. Cet interne est du type de celui décrit dans le document WO 2012-022910.

L'interne 2B comprend une multiplicité de déflecteurs correspondant à un entrecroisement de plaques selon plusieurs axes disposés parallèlement X1, X2, X3 et X4, deux plaques adjacentes (B1, B2), (B2, B3), (B3, B4), (B4, B5) autour d'un même axe Xi présentant une inclinaison opposée par rapport à la coupe de l'interne, perpendiculaire à l'axe de l'enceinte. Cet interne est du type de celui décrit dans le document WO00/35575.

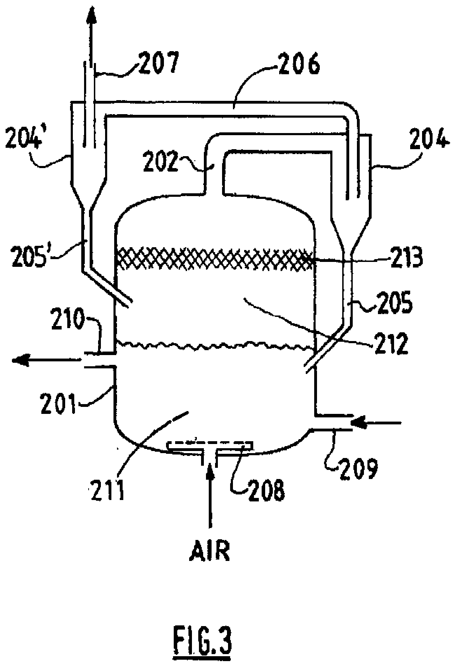

La figure 3 représente un régénérateur équipé d'un interne et de deux étages de cyclones. L'enceinte (201) du régénérateur comprend de manière classique à sa base un distributeur de gaz (208). Le régénérateur comprend dans sa partie haute une cheminée (202) de récupération des gaz. L'enceinte (201) est en outre équipée d'une entrée (209) par laquelle le catalyseur coké peut être introduit et d'une sortie (210) par laquelle le catalyseur régénéré peut être évacué.

A l'intérieur de l'enceinte (201) se trouve un lit fluidisé de particules solides comprenant un lit fluidisé dense (211) et un lit fluidisé dilué (ou à faible densité) (212), ce dernier comprenant un interne (213) disposé au-dessus du lit (211).

Le régénérateur représenté dans cet exemple est équipé d'un cyclone primaire (204) raccordé à la cheminée (202) afin de collecter les gaz issus de l'enceinte (201). Les solides éventuellement séparés par le cyclone primaire (204) sont renvoyés à l'intérieur de l'enceinte (201) via une conduite (205) qui débouche sous l'interne (213), dans le lit fluidisé dense (211).

Un cyclone secondaire (204') également externe à l'enceinte (201) collecte les gaz issus du cyclone primaire (204) via une conduite (206). Les solides éventuellement séparés par le cyclone secondaire (204') sont renvoyés à l'intérieur de l'enceinte (201) via une conduite (205') qui débouche sous l'interne (213), dans le lit fluidisé dilué (212). Les gaz issus du cyclone secondaire (204') sont évacués via une conduite (207).

Les cyclones primaire (204) et secondaire (204') sont ainsi en série.

Le régénérateur représenté comprend ainsi un étage composé d'un seul cyclone primaire et un second étage composé d'un seul cyclone secondaire. En variante, chaque étage pourrait comprendre de 2 à 10 cyclones, chaque cyclone secondaire collectant les gaz issus d'un ou plusieurs cyclones primaires.

Dans la suite de la présente description, des exemples sont donnés à titre illustratif mais non limitatif de la présente invention.

EXEMPLE I

Dans le présent exemple, on compare l'évolution de la masse de particules entraînées dans un lit fluidisé, qu'il soit équipé ou non d'interne. Le lit fluidisé est contenu dans une enceinte de 0.35 m de diamètre et 4.5 m de hauteur. Une fois fluidisé, le lit dense a une hauteur légèrement supérieure à 1m. Des vitesses superficielles de gaz (Ug) de 0.6 et 0.8 m/s ont été considérées pour les mesures.

L'interne est constitué de 5 plaques métalliques entrecroisées selon l'agencement de la figure 2B. Les plaques adjacentes autour du même axe Xi sont inclinées alternativement à 45 et à 135° par rapport au plan de section de l'interne, lui-même étant parallèle au plan de la section du régénérateur. Sur les 5 plaques, les plaques B1, B3 et B5, parallèles entre elles, sont inclinées à 45° alors que les plaques B2 et B4, également parallèles, sont inclinées à 135° par rapport à la section de l'interne et/ou à la section de l'enceinte du régénérateur (figure 2). Les longueurs de ces 5 plaques sont ajustées pour que la projection de l'interne sur le plan de la section libre de passage de l'enceinte couvre quasiment 100% de celle-ci.

L'interne, d'une épaisseur totale de 30 cm, est placé à 1.7m au-dessus du distributeur de gaz, soit à environ 0.7 m au-dessus de la surface du lit fluidisé dense.

La masse de particules entrainées par le gaz est donnée en kg/m$^2$s dans le Tableau I suivant.

TABLEAU I

| Vitesse du gaz | | Ug = 0.7 m/s | Ug = 0.8 m/s |
|---|---|---|---|
| Masse de particules entrainées par le gaz | Sans interne | 2.3 | 4.2 |
| | Avec interne | 0.6 | 0.9 |

Pour les deux vitesses de gaz envisagées, le gain lié à l'utilisation de l'interne est supérieur à 70% d'efficacité.

EXEMPLE II

Dans cet exemple, on illustre comment, l'utilisation d'un interne peut permettre de réduire la hauteur totale d'un lit fluidisé et donc la hauteur totale de l'enceinte le contenant.

Les mesures ont été réalisées à une vitesse superficielle de gaz de 0.8 m/s.

On a réalisé les essais dans l'enceinte telle que décrite dans l'exemple I. Les essais sans interne sont identiques à ceux de l'exemple I : la sortie du gaz est disposée à 4.5m du distributeur de gaz, soit à environ 3.5 mètres au dessus du lit fluidisé dense.

Pour les essais avec interne, contrairement à l'exemple I, la sortie du gaz de l'enceinte a été placée environ 30 cm au dessus de l'interne, soit à environ un mètre au-dessus du niveau du lit fluidisé dense, juste au dessus de l'interne. Les résultats sont présentés dans le tableau II.

TABLEAU II

| Vitesse du gaz | | Ug = 0.8 m/s |
|---|---|---|
| Masse de particules entrainées par le gaz (kg/m$^2$s) | Sans interne, sortie de gaz à 3.5m du niveau du lit dense (à 4,50m de la base de l'enceinte) | 4.2 |
| | Avec interne d'une épaisseur de 30cm, dont la partie inférieure est positionnée à 1m au-dessus du niveau du lit dense, la sortie de gaz étant positionnée à 30cm au-dessus de la partie supérieure de l'interne. | 1 |

L'exemple montre donc comment, malgré la diminution de la hauteur de l'enceinte, l'interne permet de réduire considérablement la quantité de particules entrainées. En effet, si la hauteur de l'enceinte avait été limitée à la TDH, la sortie gaz ne serait pas à moins de 2.5 m du niveau du lit fluidisé dense et l'entrainement de particules ne serait pas inférieur à 4.2 kg/m$^2$s. Avec l'interne, la hauteur peut être réduite considérablement tout en limitant les particules entrainées à environ 1 kg/m$^2$s.

## Revendications

1. Régénérateur pour unité de craquage catalytique formé d'une enceinte comprenant une première partie destinée à être occupée par un lit fluidisé dense de particules solides et une deuxième partie disposée au-dessus de la première partie et destinée à être occupée au moins en partie par un lit fluidisé de faible densité en particules solides, ladite deuxième partie comprenant un interne recouvrant par projection sur le plan de la section de l'enceinte au moins 80% de la section libre de l'enceinte du régénérateur, l'interne étant composé d'un ou plusieurs éléments unitaires, chaque élément unitaire étant composé d'un ou plusieurs étages de plaques inclinées, l'enceinte étant équipée d'au moins un cyclone pour la séparation d'un mélange de gaz et de particules solides issu du lit à faible densité, le cyclone étant placé à l'extérieur de l'enceinte, ledit cyclone étant agencé pour collecter ledit mélange de gaz et de particules solides et comportant une conduite débouchant à l'intérieur de l'enceinte, en dessous dudit interne, et sans traverser ce dernier.

2. Régénérateur selon la revendication 1, **caractérisé en ce que** le régénérateur est équipé d'un, deux ou trois étages de cyclones en série, chaque étage étant composé d'un nombre de cyclones variant de 1 à 10.

3. Régénérateur selon la revendication 2, **caractérisé en ce qu'**il est équipé de deux étages de cyclones en série, un étage de cyclones primaires dont le (les) cyclones est (sont) agencé(s) pour collecter les gaz issus de l'enceinte du régénérateur, et un étage de cyclones secondaires dont le (les) cyclone(s) est (sont) agencé(s) pour collecter les gaz issus de l'étage de cyclones primaires, et **en ce que** la ou les conduites qui renvoie(nt) les solides du ou des cyclones primaires à l'enceinte débouche(nt) dans la première partie de l'enceinte, sous l'interne et sans le traverser, et la ou les conduites qui renvoie(nt) les solides du ou des cyclones secondaires à l'enceinte débouche(nt) dans la deuxième partie de l'enceinte, sous l'interne et sans le traverser.

4. Régénérateur selon l'une des revendications 1 à 3, **caractérisé en ce que** l'interne est placé au-dessus du lit dense à une hauteur h de la surface du lit fluidisé dense telle que le rapport de cette hauteur sur la hauteur du fluidisé dense H$_1$ varie de 0.05 à 1.5.

5. Régénérateur selon l'une des revendications 1 à 4, **caractérisé en ce que** la structure de l'interne est choisie pour qu'il occupe moins de 10% de la section libre de passage parallèle à la section de l'enceinte du régénérateur, et pour que sa projection sur le plan de ladite section couvre plus de 80% de la surface de ladite section libre de passage, et de préférence plus de 90% de celle-ci.

6. Régénérateur selon l'une des revendications 1 à 5, **caractérisé en ce que** la section de l'interne, parallèle au plan de la section libre de l'enceinte du régénérateur, occupe au plus 5% de la surface de ladite section libre de passage.

7. Régénérateur selon l'une des revendications 1 à 6, **caractérisé en ce que** les plaques de deux étages adjacents sont disjointes.

8. Régénérateur selon l'une des revendications 1 à 7, **caractérisé en ce que** l'interne présente une hauteur de 30 à 50 cm et **en ce que** l'inclinaison de chaque plaque par rapport à un plan horizontal est comprise de 30 à 60°.

9. Régénérateur selon la revendication 8, **caractérisé en ce que** l'inclinaison de chaque plaque par rapport à un plan horizontal est comprise de 35 à 55°.

10. Régénérateur selon la revendication 9, **caractérisé en ce que** l'inclinaison de chaque plaque par rapport à un plan horizontal est comprise de 40 à 50°, voire de 45°.

11. Régénérateur selon l'une des revendications 1 à 10, **caractérisé en ce que** l'interne est composé d'un ou plusieurs éléments unitaires, chaque élément étant composé d'un ou plusieurs étages de plaques inclinées, parallèles les unes aux autres dans un même étage, et dont le sens d'inclinaison varie d'un étage à l'autre.

12. Régénérateur selon l'une des revendications 1 à 10, **caractérisé en ce que** l'interne est composé d'un ou plusieurs éléments unitaires, chaque élément étant composé d'un ou plusieurs étages de plaques inclinées, chaque étage étant composé de plaques entrecroisées.

13. Procédé de séparation d'un mélange de gaz et des particules solides issu d'un régénérateur d'une unité de craquage catalytique, ledit régénérateur comprenant une enceinte dont une première partie est occupée par un lit fluidisé dense de particules de catalyseur et une deuxième partie, disposée au-dessus de la première partie, qui est occupée par un lit fluidisé de faible densité en particules de catalyseur relativement au lit dense,
dans lequel les gaz et solides provenant du lit à faible densité traversent un interne situé à l'intérieur de l'enceinte du régénérateur, puis sont collectés en sortie de l'enceinte par au moins un cyclone de séparation situé à l'extérieur de ladite l'enceinte,
dans lequel les particules solides récupérées par le ou les cyclone(s) externe(s) sont renvoyées à l'intérieur de l'enceinte, en dessous de l'interne, sans traverser ce dernier, et
dans lequel ledit interne recouvre par projection sur le plan de la section de l'enceinte du régénérateur au moins 80% de ladite section libre de l'enceinte du régénérateur, ledit interne étant composé d'un ou plusieurs éléments unitaires, chaque élément unitaire étant composé d'un ou plusieurs étages de plaques inclinées.

14. Procédé de séparation selon la revendication 13, **caractérisé en ce que** chaque étage de plaques inclinées d'un élément unitaire est composé de plaques entrecroisées.

15. Procédé de séparation selon la revendication 13, **caractérisé en ce que** chaque élément unitaire de l'interne est composé d'un ou plusieurs étages de plaques inclinées, parallèles les unes aux autres dans un même étage, et dont le sens d'inclinaison varie d'un étage à l'autre.


**Patentansprüche**

1. Regenerator für eine katalytische Krackanlage, die aus einer Kammer gebildet ist, umfassend einen ersten Teil, der dazu bestimmt ist, eine dichte Wirbelschicht fester Partikel aufzunehmen, und einen zweiten Teil, der über dem ersten Teil angeordnet ist und dazu bestimmt ist, zumindest teilweise eine Wirbelschicht mit geringer Dichte fester Partikel aufzunehmen, wobei dieser zweite Teil einen Innenbereich umfasst, der durch Projektion auf die Ebene des Abschnitts der Kammer mindestens 80 % des freien Abschnitts der Kammer des Regenerators abdeckt, wobei der Innenbereich aus einem oder mehreren Einheitselementen besteht, wobei jedes Einheitselement aus einer oder mehreren Stufen geneigter Platten besteht, wobei die Kammer mit mindestens einem Zyklon zur Trennung eines Gemisches aus einem Gas und festen Partikeln, die aus der Schicht mit geringer Dichte stammen, ausgestattet ist, wobei der Zyklon außerhalb der Kammer platziert ist, wobei dieser Zyklon ausgelegt ist, um dieses Gemisch aus Gas und festen Partikeln aufzufangen, und eine Leitung umfasst, die im Inneren der Kammer unterhalb dieses Innenbereichs mündet und ohne diesen zu durchqueren.

2. Regenerator nach Anspruch 1, **dadurch gekennzeichnet, dass** der Regenerator mit einer, zwei oder drei Stufen von in Reihe geschalteten Zyklonen ausgestattet ist, wobei jede Stufe aus einer Anzahl von Zyklonen zwischen 1 bis 10 aufgebaut ist.

3. Regenerator nach Anspruch 2, **dadurch gekennzeichnet, dass** er mit zwei Stufen von in Reihe geschalteten Zyklonen ausgestattet ist, einer Stufe primärer Zyklone, wobei der (die) Zyklon(e) angeordnet ist (sind), um aus der Kammer des Regenerators stammende Gase aufzufangen, und eine Stufe sekundärer Zyklone, wobei der (die) Zyklon(e) angeordnet ist (sind), um aus der Stufe der primären Zyklone stammende Gase aufzufangen, und dadurch, dass die Leitung oder die Leitungen, die Feststoffe des oder der primären Zyklone in die Kammer zurückleitet (zurückleiten), im ersten Teil der Kammer unter dem Innenbereich mündet (münden) und ohne diesen zu durchqueren, und dass die Leitung oder die Leitungen, die Feststoffe des oder der sekundären Zyklone in die Kammer zurückleitet (zurückleiten), im zweiten Teil der Kammer unter dem Innenbereich mündet (münden) und ohne diesen zu durchqueren.

4.  Regenerator nach einem der Ansprüche 1 bis 3, **dadurch gekennzeichnet, dass** der Innenbereich über der dichten Schicht in einer Höhe h der Oberfläche der dichten Wirbelschicht platziert ist, sodass das Verhältnis dieser Höhe zur Höhe der dichten Wirbelschicht $H_1$ von 0,05 bis 1,5 variiert.

5.  Regenerator nach einem der Ansprüche 1 bis 4, **dadurch gekennzeichnet, dass** die Struktur des Innenbereichs so gewählt ist, dass er weniger als 10 % des freien Abschnitts des zum Abschnitt der Kammer des Regenerators parallelen Durchgangs belegt und dass seine Projektion auf die Ebene dieses Abschnitts mehr als 80 % der Oberfläche dieses Abschnitts mit freiem Durchgang bedeckt, und vorzugsweise mehr als 90 % davon.

6.  Regenerator nach einem der Ansprüche 1 bis 5, **dadurch gekennzeichnet, dass** der Innenbereichabschnitt, der parallel zur Ebene des freien Abschnitts der Kammer des Regenerators ist, höchstens 5 % der Oberfläche dieses Abschnitts mit freiem Durchgang belegt.

7.  Regenerator nach einem der Ansprüche 1 bis 6, **dadurch gekennzeichnet, dass** die Platten von zwei benachbarten Stufen getrennt sind.

8.  Regenerator nach einem der Ansprüche 1 bis 7, **dadurch gekennzeichnet, dass** der Innenbereich eine Höhe von 30 bis 50 cm aufweist und dass die Neigung jeder Platte bezogen auf eine horizontale Ebene zwischen 30 und 60° liegt.

9.  Regenerator nach Anspruch 8, **dadurch gekennzeichnet, dass** die Neigung jeder Platte bezogen auf eine horizontale Ebene zwischen 35 und 55° liegt.

10. Regenerator nach Anspruch 9, **dadurch gekennzeichnet, dass** die Neigung jeder Platte bezogen auf eine horizontale Ebene zwischen 40 und 50° liegt, nämlich bei 45°.

11. Regenerator nach einem der Ansprüche 1 bis 10, **dadurch gekennzeichnet, dass** der Innenbereich aus einem oder mehreren Einheitselementen besteht, wobei jedes Element aus einer oder mehreren Stufen geneigter Platten aufgebaut ist, die in einer Stufe zueinander parallel sind und deren Neigungsrichtung von einer Stufe zur anderen variiert.

12. Regenerator nach einem der Ansprüche 1 bis 10, **dadurch gekennzeichnet, dass** der Innenbereich aus einem oder mehreren Einheitselementen besteht, wobei jedes Element aus einer oder mehreren Stufen geneigter Platten besteht, wobei jede Stufe aus verschränkten Platten besteht.

13. Verfahren zur Trennung eines Gemisches aus Gas und festen Partikeln, das aus einem Regenerator einer katalytischen Krackanlage stammt, wobei dieser Regenerator eine Kammer umfasst, in der ein erster Teil von einer dichten Wirbelschicht aus Katalysatorpartikeln belegt ist und ein zweiter Teil, der über dem ersten Teil angeordnet ist, der von einer Wirbelschicht mit geringer Dichte von Katalysatorpartikeln bezogen auf die dichte Schicht belegt ist,
    in welchem die Gase und Feststoffe, die aus der Schicht mit geringer Dichte kommen, einen Innenbereich durchqueren, der sich im Inneren der Kammer des Regenerators befindet, und dann am Ausgang der Kammer durch mindestens einen Trennungszyklon aufgefangen werden, der sich außerhalb dieser Kammer befindet,
    in welchem die festen Partikel, die durch den oder die äußeren Zyklon(e) gewonnen wurden, ins Innere der Kammer unterhalb des Innenbereichs zurückgeleitet werden, ohne diesen zu durchqueren, und
    in welchem dieser Innenbereich durch Projektion auf die Ebene des Abschnitts der Kammer des Regenerators mindestens 80 % dieses freien Abschnitts der Kammer des Regenerators abdeckt, wobei dieser Innenbereich aus einem oder mehreren Einheitselementen besteht, wobei jedes Einheitselement aus einer oder mehreren Stufen geneigter Platten besteht.

14. Verfahren zur Trennung nach Anspruch 13, **dadurch gekennzeichnet, dass** jede Stufe geneigter Platten eines Einheitselements aus verschränkten Platten besteht.

**15.** Verfahren zur Trennung nach Anspruch 13, **dadurch gekennzeichnet, dass** jedes Einheitselement des Innenbereichs aus einer oder mehreren Stufen geneigter Platten aufgebaut ist, die in einer Stufe zueinander parallel sind und deren Neigungsrichtung von einer Stufe zur anderen variiert.

**Claims**

**1.** A regenerator for a catalytic cracking unit formed of a vessel comprising a first part intended to be occupied by a dense fluidised bed of solid particles and a second part positioned above the first part and intended to be occupied at least partly by a fluidised bed having a low density of solid particles, said second part comprising one internal member that covers, by projection onto the plane of the cross section of said vessel, at least 80% of the free cross-sectional area of the vessel of the regenerator, the internal member being made up of one or more individual elements, each individual element being made up of one or more stages of inclined plates, the vessel being equipped with at least one cyclone for separating a mixture of gas and solid particles derived from the low-density bed, said cyclone being placed outside the vessel, said cyclone being designed to collect said mixture of gas and solid particles and comprising a pipe that opens inside the vessel, below said internal member, without passing through said internal member.

**2.** The regenerator according to claim 1, **characterised in that** the regenerator is equipped with one, two or three cyclone stages in series, each stage being made up of a number of cyclones that varies from 1 to 10.

**3.** The regenerator according to claim 2, **characterised in that** said regenerator is equipped with two cyclone stages in series: a primary cyclones stage, the cyclone(s) of which is/are designed to collect the gases derived from the vessel of the regenerator, and a secondary cyclones stage, the cyclone(s) of which is/are designed to collect the gases derived from the primary cyclones stage, and **in that** the pipe(s) which return(s) the solids from the primary cyclone(s) to the vessel open(s) into the first part of the vessel, below the internal member and without passing through it, and the pipe(s) which return(s) the solids from the secondary cyclone(s) to the vessel open(s) into the second part of the vessel, below the internal member and without passing through it.

**4.** The regenerator according to any one of claims 1 to 3, **characterised in that** the internal member is placed above the dense bed at a height h from the surface of the dense fluidised bed such that the ratio of this height to the height of the dense fluidised bed $H_1$ varies from 0.05 to 1.5.

**5.** The regenerator according to any one of clams 1 to 4, **characterised in that** the structure of the internal member is chosen so that the internal member occupies less than 10% of the free cross-sectional area parallel to the cross section of said vessel of the regenerator and so that its projection onto the plane of said cross section covers more than 80% of the surface area of said free cross-sectional area, and preferably more than 90% thereof.

**6.** The regenerator according to any one of claims 1 to 5, **characterised in that** the cross section of the internal member, parallel to the plane of the free area of the vessel of the regenerator, occupies at most 5% of the surface area of said free cross-sectional area.

**7.** The regenerator according to any one of claims 1 to 6, **characterised in that** the plates of two adjacent stages are separate.

**8.** The regenerator according to any one of claims 1 to 7, **characterised in that** the internal member has a height of from 30 to 50 cm, and **in that** the inclination of each plate with respect to a horizontal plane is from 30 to 60°.

**9.** The regenerator according to claim 8, **characterised in that** the inclination of each plate with respect to a horizontal plane is from 35 to 55°.

**10.** The regenerator according to claim 9, **characterised in that** the inclination of each plate with respect to a horizontal plane is from 40 to 50°, or even 45°.

**11.** The regenerator according to any one of claims 1 to 10, **characterised in that** the internal member is made up of one or more individual elements, each element being made up of one or more stages of inclined plates which are parallel to one another within one and the same stage and of which the direction of inclination varies from one stage to the other.

**12.** The regenerator according to any one of claims 1 to 10, **characterised in that** the internal member is made up of one or more individual elements, each element being made up of one or more stages of inclined plates, each stage being made up of plates that criss-cross one another.

**13.** A method for separating a mixture of gas and solid particles derived from a regenerator of a catalytic cracking unit, said regenerator comprising a vessel of which a first part is occupied by a dense fluidised bed of catalyst particles and a second part, arranged above the first part, is occupied by a fluidised bed having a low catalyst-particle density with respect to the dense bed,

wherein the gases and solids from the low-density bed pass through an internal member situated inside the vessel of the regenerator and are then collected at the outlet of the vessel by at least one separation cyclone situated outside said vessel,

wherein the solid particles recovered by the external cyclone(s) are returned into the vessel, below the internal member and without passing through it, and

wherein said internal member covers, by projection onto the plane of the cross section of the vessel of the regenerator, at least 80% of said free cross-sectional area of the vessel of the regenerator, said internal member being made up of one or more individual elements, each individual element being made up of one or more stages of inclined plates,

**14.** The separation method according to claim 13, **characterised in that** each stage of inclined plates of an individual element is made up of plates that criss-cross one another.

**15.** The separation method according to claim 13, **characterised in that** each individual element of the internal member is made up of one or more stages of inclined plates which are parallel to one another within one and the same stage and of which the direction of inclination varies from one stage to the other.

**Figure 1**

**2A**

101

A1 →

A2 →

A3 →

102

103

**2B**

B5

B4

B2

B3

B1

X1    X2    X3    X4

**Figure 2**

**FIG.3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6503460 B
- US 7829750 B
- US 3851405 A
- EP 49130 A
- US 2728632 A
- US 4589352 A
- WO 0035575 A
- WO 2012022910 A

**Littérature non-brevet citée dans la description**

- **DE DAIZO KUNII ; OCTAVE LEVENSPIEL.** Fluidization Engineering. 1991